(19) Europäisches Patentamt
European Patent Office
Office européen des brevets

(11) **EP 1 342 297 B1**

(12) **EUROPÄISCHE PATENTSCHRIFT**

(45) Veröffentlichungstag und Bekanntmachung des Hinweises auf die Patenterteilung:
**05.03.2008  Patentblatt 2008/10**

(21) Anmeldenummer: **01980513.4**

(22) Anmeldetag: **23.10.2001**

(51) Int Cl.:
**H01S 3/109** *(2006.01)*       **H01S 3/081** *(2006.01)*

(86) Internationale Anmeldenummer:
**PCT/EP2001/012241**

(87) Internationale Veröffentlichungsnummer:
**WO 2002/037620 (10.05.2002 Gazette 2002/19)**

(54) **VORRICHTUNG ZUM ERZEUGEN VON LASERLICHT**

DEVICE FOR PRODUCING LASER LIGHT

DISPOSITIF DESTINE A PRODUIRE DE LA LUMIERE LASER

(84) Benannte Vertragsstaaten:
**AT CH DE FR GB LI**

(30) Priorität: **23.10.2000  DE 10052461**

(43) Veröffentlichungstag der Anmeldung:
**10.09.2003  Patentblatt 2003/37**

(73) Patentinhaber: **Lumera Laser GmbH**
**67661 Kaiserslautern (DE)**

(72) Erfinder:
• **HENRICH, Bernhard**
**67655 Kaiserslautern (DE)**

• **ROBERTSON, Andrew**
**Paignton, Devon TQ3 1RD (GB)**
• **NEBEL, Achim**
**67705 Trippstadt (DE)**

(74) Vertreter: **Patentanwälte Lambsdorff & Lange**
**Dingolfinger Strasse 6**
**81673 München (DE)**

(56) Entgegenhaltungen:
**DE-A- 19 819 473        US-A- 5 054 027**
**US-A- 5 278 855        US-A- 5 317 577**
**US-A- 5 345 454**

**Beschreibung**

Die Erfindung betrifft eine Vorrichtung zum Erzeugen von Laserlicht mit einem laseraktiven Hauptresonator sowie einem angekoppelten nichtlinearen Resonator, wobei jeder der beiden Resonatoren durch Spiegel begrenzt ist, und ein Spiegel des Hauptresonators mit einem Spiegel des angekoppelten nichtlinearen Resonators identisch ist.

Bei einem Resonator einer Vorrichtung zum Erzeugen von Laserlicht treten üblicherweise mehrere Moden von Laserschwingungen auf. Insbesondere bei gepulsten Lasern mit Pulsen im Pikosekundenbereich, die aufgrund der Kürze des Wellenzugs ein sehr großes Wellenlängenspektrum emittieren, kann dies zu Instabilitäten führen, da bei jedem Puls statistisch eine andere Amplitudenverteilung bezüglich der verschiedenen Moden eingenommen werden kann.

Dies kann man mit verschiedenen Verfahren zur Modenkopplung vermeiden. Modenkopplung bedeutet, daß die longitudinalen Moden eines Lasers eine feste Phasenbeziehung haben und damit phasenstarr aneinander gekoppelt werden. Dadurch wird vor allem bewirkt, daß der Laser seine Energie in Form von ultrakurzen Pulsen abgibt. Diese ultrakurzen Pulse haben abhängig vom Lasermaterial und der Art der Modenkopplung Pulsdauern von etwa 100 ps bis zu wenigen Femtosekunden. Der zeitliche Abstand von einem ultrakurzen Puls zum nächsten Puls entspricht der Resonatorumlaufzeit.

Die unterschiedlichen bekannten Verfahren lassen sich in aktive und passive Verfahren unterscheiden. Die Erfindung wird im folgenden ausschließlich anhand passiver Verfahren erläutert.

Bei der passiven Modenkopplung moduliert ein im Resonator umlaufender Puls selbst seine Amplitude. Aktive Bauelemente zur Amplituden- oder Frequenzmodulation können dann entfallen.

Zur passiven Modenkopplung wird ein nichtlineares Element eingesetzt, dessen Wirkung am einfachsten anhand der sättigbaren Absorption verstanden werden kann, bei der die Absorption bei hohen Lichtintensitäten gesättigt und die Transmission damit im Vergleich zu niedrigen Lichtintensitäten erhöht wird. Dadurch wird vorzugsweise ein Zustand höherer Lichtintensität erzwungen, die vor allem mit der dadurch bedingten Verkürzung eines Pulses erreicht wird, der somit als reproduzierbarer physikalischer Zustand eingestellt wird. Die gesättigte Absorption kann man beispielsweise mit Hilfe von Halbleiterbauelementen verwirklichen wobei die optische Anregung mit geeignet hoher Intensität Elektronen vom Valenzband aus vollständig in das Leitungsband übergehen läßt.

Insbesondere ist aber hier auch die nichtlineare Phasenverschiebung durch die Wechselwirkung des Laserlichts mit einem Medium interessant, das einen nichtlinearen Brechungsindex, insbesondere aufgrund des Kerreffekts, aufweist. Es kommt zur Selbstphasenmodulation des Lichts, wenn die Kerr-Nichtlinearität eine zeitabhängige Phasenverschiebung verursacht, beispielsweise in einer Lichtleitfaser. Weiter wird eine Selbstfokussierung des Laserlichts möglich, wenn die Kerr-Nichtlinearität eine ortsabhängige Phasenverschiebung verursacht. Ein derartiges Verhalten läßt sich theoretisch analog dem oben angegebenen sättigbaren Absorber durch einen sogenannten artifiziellen sättigbaren Absorber beschreiben.

Physikalisch macht es dabei einen großen Unterschied, ob der Prozeß resonant oder nichtresonant ist. Resonante Prozesse verlaufen langsamer als nichtresonante. Die beispielhaft genannte optische Kerr-Nichtlinearität ist ein nichtresonanter Prozeß von nur einigen Femtosekunden Anstiegszeit. Damit ist eine schnelle Modulation möglich, so daß im wesentlichen keine Erholzeit zu berücksichtigen ist.

Wegen der nichtresonanten Wechselwirkung ist die Modenkopplung insbesondere auch über einen großen Wellenlängenbereich möglich. Vor allem beim Kerr-Prozeß mit einer Lichtleitfaser ist auch die Absorption sehr gering und kann durch Vorsehen einer geeigneten Länge der Faser beliebig erhöht werden. Damit wird auch eine einfache Anpassung der Laser durch geeignete Wahl der Parameter des nichtlinearen Resonators möglich, so daß Modenkopplung bei unterschiedlichen Lasersystemen und bei Lasern mit unterschiedlichen Ausgangsdaten, insbesondere maximaler Ausgangsleistung, Pulsdauer und Wiederholrate der Pulse, erreichbar ist.

Für eine derartige Modenkopplung wird üblicherweise, wie beispielsweise in der US 5 054 027 beschrieben, ein Hilfsresonator benutzt, an den ein nichtlinearer Resonator angekoppelt wird. Die Ankopplung erfolgt dabei üblicherweise über ein Interferometer. Durch dieses wird eine Modenkopplung jedoch aufwendig und störanfällig, vor allem ist wegen der notwendigen ortsgenauen Positionierung eines Interferometers bis auf Bruchteile einer Wellenlänge ein besonders stabiler Aufbau erforderlich.

Die angegebene US- Patentschrift zeigt allerdings als Alternative auch eine einfachere Anordnung, bei welcher der Spiegel des Hauptresonators, der dem Spiegel zur Auskopplung des erzeugten Laserlichts gegenüberliegt, gleich einem der Spiegel des nichtlinearen Resonators ist. Zur Überführung des Lichts aus dem Hauptresonator in den nichtlinearen Resonator ist dieser Spiegel mit einer Transmission von 5-35% teildurchlässig.

Eigene Versuche haben aber gezeigt, daß mit den angegebenen Werten kein dauerhaft stabiler Modenbetrieb möglich war. Dieses Ausführungsbeispiel ist in der US-Patentschrift wohl eher als Idee angegeben, deren praktische Verwirklichung wohl nicht ohne weiteres möglich ist. Man ist daher weiter auf die bekannten interferometrischen Verfahren mit den genannten Nachteilen angewiesen.

Bekannt sind diesbezüglich Aufbauten mit Fabry-Perot-Resonatoren oder Michelsoninterferometem. Für die speziellen Konfigurationen wird auf die reichhaltige Literatur verwiesen.

Ein weiterer Nachteil, der diese Verfahren auf Systeme mit vergleichsweise geringer Ausgangsleistung von weniger als 7 W begrenzt, ist die Notwendigkeit der Einkopplung des Laserlichts in eine single-mode Lichtleitfaser, die bei hohen eingekoppelten Leistungen nur eine geringe Lebensdauer aufweist.

Andererseits besteht ein hoher Bedarf an modengekoppelten Laserstrahlquellen, die ultrakurze Pulse von kleiner 20 ps bis in den Femtosekundenbereich liefern. Neben der Meßtechnik zur Erfassung sehr genauer Zeitabläufe sei hier vor allem die Projektion von Bildern, insbesondere von Videobildern, mit Laser genannt. Ein Bedarf ist vor allem dadurch vorhanden, daß man die Großbildfernsehtechnik für den Konsumerbereich möglich machen will.

Ein Laser liefert dafür eine genügend hohe Leuchtdichte. Allerdings entstehen unabhängig von der verwendeten Abbildungstechnik aufgrund der hohen Kohärenz von Laserlicht unerwünschte Glitzereffekte, die durch eine große spektrale Breite bzw. eine geringe Kohärenzlänge wirkungsvoll vermieden werden können. Bei ultrakurzen Pulsen ist diese Eigenschaft von vornherein gegeben.

Folgende Merkmale sind daher für eine solcherart einsetzbare Laserquelle äußerst wünschenswert:

- eine hohe mittlere Leistung von einigen Watt oder mehr;
- eine kurze Pulsdauer der Laserpulse von weniger als 20 ps;
- eine hohe Repetitionsrate der Laserpulse von größer als 40 MHz;
- eine gute, möglichst beugungsbegrenzte Strahlqualität;
- ein möglichst einfacher und kompakter Aufbau;
- die Verwendung eines Modenkopplungsverfahrens, das für verschiedene Lasermaterialien und Emissionswellenlängenbereiche einsetzbar ist,
- gegen äußere Störungen und Einstellungen der Parameter des Lasers bzw. des Resonators robust ist sowie
- Modenkopplung ohne wesentliche Einschränkungen für unterschiedliche Repetitionsraten ermöglicht.

Aufgrund der vorangehend genannten Nachteile kann nicht erwartet werden, daß alle diese Ziele auf einfache Weise erreicht werden können. Deshalb wurde dieser Erfindung ein wesentlich einfacheres Problem zugrunde gelegt, das die wesentlichen Anforderungen für erhöhte Stabilität und robusten Aufbau erfüllt.

Die Druckschrift US-A-5,345,454 beschreibt einen Halbleiter-Schichtaufbau, welcher als sättigbarer Absorber zum Zwecke der passiven Modenkopplung in einem Lasersystem eingesetzt werden kann. Das Lasersystem besteht aus einem Hauptresonator, in welchem das Lasermedium angeordnet ist, und einem an diesen angekoppelten nichtlinearen Resonator, welcher den sättigbaren Absorber enthält. Der sättigbare Absorber ist innerhalb des nichtlinearen Resonators zwischen den Spiegelschichten eines Fabry-Perot-Etalon angeordnet, von denen eine eine hochreflektierende Spiegelschicht ist und die andere eine teilreflektierende und teildurchlässige Spiegelschicht ist.

Aufgabe der Erfindung ist es, ein Verfahren und eine Vorrichtung zur Erzeugung eines gepulsten Laserstrahls unter Einsatz von Modenkopplung zu schaffen, mit welchen ein robuste Aufbau und ein zeitlich stabiler Betrieb ermöglicht werden kann.

Ausgehend vom einleitend genannten Stand der Technik wird die Aufgabe durch die Merkmale der Ansprüche 1 und 2 gelöst.

Das Verhältnis aus Pumpleistung im Laserbetrieb und Schwellenpumpleistung ist die Schwellenüberhöhung. Die Schwellenüberhöhung kann sehr einfach aus der Frequenz der Relaxationsoszillationen, d.h. der Frequenz mit der die Ausgangsleistung um die Gleichgewichtslage schwingt, und den Gesamtverlusten des Hauptresonators, bestimmt werden.

Es gilt, H. G. Danielmeyer, "Low-frequency dynamics ofhomogeneous four-level-cw lasers", Journal of Applied Physics 41, (1970) 4014:

$$r = 1 + 4\,\pi^2\,f_R{}^2\,\tau_{sp}\,T_R\,/\,(2\alpha_r)$$

.

Mit r der Schwellenüberhöhung, $f_R$ der Frequenz der Relaxationsoszillationen, $2\alpha_r$ den Gesamtverlusten im Haugtresonator, $T_R$ der Resonatorumlaufzeit und $\tau_{sp}$ der Fluoreszenzlebensdauer des oberen Laserniveaus.

Wie vorstehend schon ausgeführt wurde, haben Versuche mit dem aus der US 5 054 027 bekannten Aufbau mit einem Hauptresonator sowie einem angekoppelten nichtlinearen Resonator, bei der jeder der beiden Resonatoren durch Spiegel begrenzt ist und ein Spiegel des Hauptresonators mit einem Spiegel des angekoppelten nichtlinearen Resonators identisch ist, keinen Erfolg bezüglich der erreichbaren Stabilität gezeigt.

Dagegen wäre aber zu erwarten, daß dieser Aufbau eine höhere mechanische Stabilität als bei den bekannten Aufbauten mit Interferometern zuläßt, bei denen allerdings eine Positionierungsgenauigkeit von Bruchteilen von Wellenlängen erforderlich ist.

Unerwarteterweise hat sich aber bei einem speziellen Versuchsaufbau herausgestellt, daß dann, wenn die Transmission des gemeinsamen Spiegels von Hauptresonator und nichtlinearem Resonator kleiner als 5% war, also völlig abweichend von der Lehre der US- Patentschrift, auch ein stabiler modengekoppelter Laserbetrieb möglich wurde. Weiteres Nachdenken und Versuche, wie später noch detailliert gezeigt werden wird, haben allerdings zu dem Schluß geführt, daß das wesentliche Merkmal, das einen robusten Aufbau bei stabilem modengekoppeltem Laserbetrieb erlaubt, nicht die Transmission des Spiegels ist, sondern ausschließlich, daß die angegebene Obergrenze für den Leistungsverlust im nichtlinearen Resonator von 63% eingehalten wird, und daß der laseraktive Hauptresonator im Laserbetrieb eine Schwellenpumpleistung besitzt, die weniger als ein Fünftel, bevorzugt weniger als ein Zehntel der eingesetzten Pumpleistung beträgt, mit der der laseraktive Hauptresonator angeregt wird.

Es war auch völlig unerwartet, daß die oben genannten wünschenswerten Eigenschaften aufgrund der Erfindung, insbesondere auch unter Einschluß der im folgenden dargestellten Weiterbildungen, völlig unproblematisch erreicht wurden.

Bei einer vorteilhaften Weiterbildung der Erfindung ist vorgesehen, daß der Spiegel, der sowohl den Hauptresonator als auch den nichtlinearen Resonator begrenzt, eine Transmission aufweist, die weniger als die Hälfte und insbesondere weniger als 1/3 der Transmission des Auskoppelspiegels des Hauptresonators beträgt.

Die Grundlage für diese Weiterbildung besteht darin, daß möglichst wenig Leistung in den nichtlinearen Resonator eingekoppelt werden soll. Ist das nichtlineare Medium im Resonator nämlich beispielsweise eine Lichtleitfaser, könnte diese durch eine zu große in dieses Medium eingekoppelte Leistung zerstört werden. Das begrenzt dann die Auslegung des Lasers für hohe mittlere Ausgangsleistung.

Wie später aus noch eingehend erläuterten Rechnungen ersichtlich wird, ist das erfindungsgemäße Stabilitätskriterium von der Transmission des Spiegels zwischen Hauptresonator und nichtlinearem Resonator nahezu unabhängig. Die Leistung im nichtlinearen Resonator kann deshalb aufgrund der Erfindung nahezu beliebig geringgehalten werden, was wiederum zur Folge hat, daß die mittlere Ausgangsleistung wegen der geringeren Belastung des nichtlinearen Mediums erhöht werden kann.

Diesbezüglich ist es besonders vorteilhaft, wenn der Spiegel, der sowohl den Hauptresonator als auch den nichtlinearen Resonator begrenzt, eine Transmission kleiner gleich 5% hat. Dies ist ein Ergebnis, das aufgrund des vorangehend zitierten Stands der Technik überhaupt nicht erwartet werden konnte.

Gemäß einer anderen bevorzugten Weiterbildung ist vorgesehen, daß der nichtlineare Resonator ein Medium mit nichtlinearem Brechungsindex aufweist. Erfindungsgemäß wurde, wie dargestellt, vorgesehen, daß die Verluste im nichtlinearen Resonator möglichst gering sein sollten. Dazu ist es vorteilhafter, einen physikalischen Prozeß einzusetzen, der im wesentlichen nicht auf Absorption beruht, wie insbesondere eine Modenkopplung über den nichtlinearen Brechungsindex.

Bei einer bevorzugten Weiterbildung ist vorgesehen, daß das Medium mit nichtlinearem Brechungsindex zumindest teilweise durch den Kern einer Lichtleitfaser ausgebildet ist.

Diesbezüglich wurden die Vorteile einer Lichtleitfaser vorstehend schon eingehender erörtert. Insbesondere ist hier aber die bessere Anpassungsfähigkeit des Mediums auf die vorgegebenen Bedingungen des Lasers mit einer Lichtleitfaser hervorzuheben, da die Phasenmodulation und die Leistung über die Wahl der Länge und des Kernmaterials bzw. Dotierung getrennt eingestellt werden können.

Die Verluste werden vor allem bei einer bevorzugten Weiterbildung der Erfindung verringert, bei der mindestens ein Ende der Lichtleitfaser mit einer Antireflexschicht versehen ist.

Bei einer anderen bevorzugten Weiterbildung der Erfindung ist vorgesehen, daß ein den nichtlinearen Resonator begrenzender Spiegel als verspiegelte Endfläche der Lichtleitfaser ausgebildet ist. Dadurch wird der Aufbau wesentlich vereinfacht und unkritischer. Bei einer anderen Anordnung mit einem großen Spiegel üblicher Größe hätte man nämlich eine Linse zur Fokussierung auf den Kern vorsehen müssen, was erstens ein zusätzliches Bauelement notwendig machen und zweitens auch eine gewisse Justiergenauigkeit des Fokus auf den Kern erfordern würde, die durch Stoß auf den Laser zerstört werden könnte, wenn dagegen nicht besondere Maßnahmen getroffen würden. Solche Stöße sind nämlich beim Einsatz eines Lasers der genannten Art bei einem Großprojektionsfernseher im Heim oder beim kommerziellen Einsatz während des Transports von Veranstaltung zu Veranstaltung nicht auszuschließen.

Bei der folgenden vorteilhaften Weiterbildung der Erfindung wird eine Auswahl bezüglich desjenigen Spiegels getroffen, der durch eine Verspiegelung des Lichtleitfaserendes geschaffen wird. Diese ist dadurch gekennzeichnet, daß nur der den nichtlinearen Resonator begrenzende Spiegel, der gegenüber demjenigen Spiegel liegt, der mit dem des Hauptresonators identisch ist, als verspiegelte Endfläche der Lichtleitfaser ausgebildet ist.

Dadurch, daß die Verspiegelung der Lichtleitfaser nur auf einer Seite vorgenommen wird und die Seite der Faser, die zum Hauptresonator weist, frei bleibt, erhält man die obengenannten sich aus der Verspiegelung des Lichtleitfaserendes ergebenden Vorteile, jedoch lassen sich auch am anderen Ende Linsen, optische Systeme oder ähnliches unterbringen, welche eine bessere Einkopplung in die Lichtleitfaser gestatten, um die Verluste unter die erfindungsgemäß vorgesehene Grenze zu senken.

Bei einer vorteilhaften Weiterbildung der Erfindung ist eine Linse zur Einkopplung von Licht in die Lichtleitfaser vorgesehen, deren eine Seite als Spiegel für den Hauptresonator verspiegelt ist. Dadurch spart man nicht nur Bauelemente ein, sondern erhöht auch die Stabilität, da der Abstand von Spiegel zur Linse automatisch konstant bleibt.

Bei einer bevorzugten Weiterbildung der Erfindung ist vorgesehen, daß ein den nichtlinearen Resonator begrenzender Spiegel, der mit dem Spiegel des Hauptresonators nicht identisch ist, eine in Richtung auf das Resonatorinnere konkav gekrümmte Oberfläche aufweist, deren Brennweite insbesondere kleiner als das Dreifache und insbesondere kleiner als das Doppelte der Resonatorlänge des nichtlinearen Resonators ist.

Bei Experimenten wurde festgestellt, daß damit die Stabilität der Intensität des Laserlichts bedeutend erhöht werden konnte. Dies hätte man allerdings von vornherein nicht erwartet, denn der Versuchsaufbau wies zwischen dem Spiegel und der Lichtleitfaser auch eine Linse auf. Man hätte erwartet, daß sich statt des genannten konkaven Spiegels auch ein ebener Spiegel einsetzen ließe, wenn die Brennweite der sonst konkaven Spiegelfläche bei derjenigen der Linse berücksichtigt worden wäre. Diese Vermutung wurde aber experimentell nicht bestätigt. Im Unterschied dazu hat sich bei konkaver Spiegelfläche jedoch herausgestellt, daß die Justiergenauigkeit wesentlich verbessert wurde, was sich dann auch auf die Stabilität günstig auswirkt.

Eine andere vorteilhafte Weiterbildung der Erfindung ist dadurch gekennzeichnet, daß zwischen den äußeren Spiegeln des Hauptresonators oder des nichtlinearen Resonators weitere Spiegel zur Faltung des Lichtwegs vorgesehen sind, von denen mindestens einer zum Einkoppeln des Pumplichts vorgesehen ist. Mit dieser Weiterbildung wird vor allem die Kompaktheit und die Einfachheit des Aufbaus gefördert.

Gemäß einer anderen bevorzugten Weiterbildung ist vorgesehen, daß der laseraktive Hauptresonator mit einem lasenden Medium zwischen den Spiegeln als Laser ausgebildet ist, für den zwei optische Elemente, insbesondere zwei Spiegel mit einer Krümmung und einem Abstand zum lasenden Medium vorgesehen sind, aufgrund derer die Laserstrahlung mit einer Beugungsmaßzahl $M^2 < 2$ emittierbar ist. Solche optische Elemente können Spiegel oder Linsen sein. Die Festlegung der Beugungsmaßzahl erlaubt nicht nur Ausgangsstrahlen geringer Divergenz, sondern ermöglicht auch eine besonders gute Einkopplung in das nichtlineare Medium. Die Obergrenze von 2 hat sich diesbezüglich als besonders günstig herausgestellt. Weiter ist das Vorsehen zweier Spiegel zum Verwirklichen einer geringen Beugungsmaßzahl eine besonders einfache Maßnahme, mit der ein robuster Aufbau leicht erzielt wird. Diese Lehre weicht von bekannten Maßnahmen bei Hochleistungslasern ab, wo man durchaus große Beugungsmaßzahlen realisiert.

Weitere Vorteile und Besonderheiten der Erfindung ergeben sich auch aus der nachfolgenden Darstellung von Ausführungsbeispielen unter Bezugnahme auf die beigefügte Zeichnung. Es zeigen:

| | |
|---|---|
| Fig. 1 | ein Prinzipbild zur Erläuterung des der Erfindung zugrundeliegenden Prinzips; |
| Fig. 2 | eine Schemazeichnung auch für den praktischen Aufbau eines Ausführungsbeispiels; |
| Fig. 3 | Meßwerte für eine Pulsdauer in Abhängigkeit einer Spiegelposition; |
| Fig. 4 | Stabilitätsmessungen an einem Nd:YVO$_4$ Lasers bei Veränderung der Resonatorlänge; |
| Fig. 5 a, b, c: | verschiedene Stabilitätsmessungen für unterschiedliche Verluste im nichtlinearen Resonator. |

Die folgenden Ausführungsbeispiele betreffen Vorrichtungen, bei denen Modenkopplungsverfahren eingesetzt werden.

Die dargestellten Laser sind für ultrakurze Pulse mit gleichzeitig hoher mittlerer Leistung und hoher Repetitionsrate ausgelegt. Die Ausgangsleistung und die Pulsdauer sind im wesentlichen unabhängig voneinander einstellbar und optimierbar.

Die Stabilität des Lasers ist mit dem eingesetzten Modenkopplungsverfahren auch hinreichend groß, so daß das Lasersystem nicht aktiv längenstabilisiert werden muß.

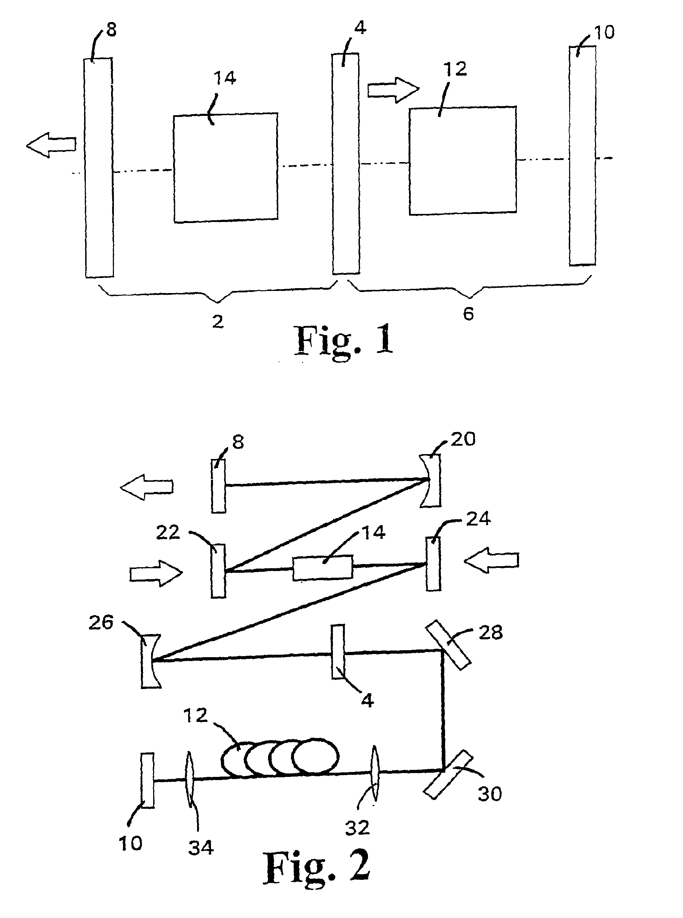

In dem schematischen Beispiel von Fig. 1 ist ein Hauptresonator 2 zu sehen, der über einen Spiegel 4 geringer Transmission mit einem nichtlinearen Resonator 6 in Verbindung steht. Mit den Spiegeln 8 und 10 werden jeweils in Verbindung mit dem Spiegel 4 zwei Fabry- Perot-Resonatoren aufgebaut. Der Spiegel 8 ist dabei ferner als Auskoppelspiegel mit einer geeignet gewählten Transmission ausgelegt. Im Gegensatz zu anderen bekannten Ausführungsformen von "APM"-Lasern (additive Pulse modelocking = additive Puls- Modenkopplung) wird bei der Vorrichtung von Fig. 1 die Auskopplung aus dem Hauptresonator auf mehrere Auskoppelspiegel 8 und 4 verteilt. Der Auskoppelgrad dieser Auskoppelspiegel ist unabhängig voneinander einstellbar, wodurch es auch bei konstanter Pumpleistung möglich wird, die Ausgangsleistung und die Pulsdauer des Lasers zu optimieren.

Durch Ändern des Auskoppelgrades von Spiegel 8 kann die nutzbare Ausgangsleistung variiert werden. Durch die Wahl des Auskoppelgrades von Spiegel 4 wird die Leistung angepaßt, die in den angekoppelten nichtlinearen Resonator injiziert wird. Da die resultierende Pulsdauer von der Leistung der Strahlung im angekoppelten Resonator abhängt, kann durch die Änderung des Auskoppelgrades von Spiegel 4, d. h. die Veränderung der Güte des angekoppelten Resonators, die Pulsdauer variiert werden. Durch die Wahl zweier Auskoppelspiegel vereinfacht sich ferner der Resonatoraufbau, da auch Komponenten wie eine Halbwellenplatte und ein Polarisationsstrahlteiler, wie sie aus dem Stand der Technik zur Ankoppelung nichtlinearer Resonatoren bekannt sind, entfallen. Außerdem ist der Modenkopplungsmechanismus bei Vorrichtungen, wie sie in Fig. 1 schematisch gezeigt sind, vollkommen unabhängig von der Polarisation der Laserstrahlung.

Die hohe passive Stabilität dieses Verfahrens wird durch die Minimierung der Verluste im nichtlinearen Resonator erreicht. In allen bisher bekannten Aufbauten besaß der angekoppelte Resonator eine geringe Güte mit hohen Verlusten.

Bei dem in Fig. 1 eingesetzten Modenkopplungsverfahren werden dagegen die Verluste im angekoppelten Resonator auf ein Mindestmaß reduziert. Das bedeutet, daß die Transmission des Spiegels 4 hinreichend gering gewählt, insbesondere sogar typisch kleiner als 5 %, werden kann. Damit läßt sich erreichen, daß selbst bei Langenänderungen von mehreren Mikrometern, typisch 4 bis 6 Mikrometern, ein Pulsbetrieb stabil möglich ist. Wenn die Transmission von Spiegel 4 zu niedrig ist, entstehen allerdings keine ultrakurzen Pulse mehr, da dann die in den Laser zurückgekoppelte Leistung zu gering wird.

Die hohe Güte des angekoppelten nichtlinearen Resonators 6 führt bei Änderung der Phasenlage der Resonatoren zueinander zu starken Intensitätsfluktuationen im angekoppelten Resonator. Die Intensitätsfluktuationen bewirken eine große Änderung der Selbstphasenmodulation, d. h. der nichtlinearen Phase in dem angekoppelten Resonator. Diese Änderung der nichtlinearen Phase kann die Änderung der linearen Phase innerhalb eines großen Bereichs von mehreren $\pi$ kompensieren, so daß weiterhin eine konstruktive Interferenz in dem Hauptresonator gewährleistet bleibt. Aus diesem Grund ist mit dem gezeigten Aufbau und dem eingesetzten Modenkopplungsverfahren ein stabiler modengekoppelter Betrieb des Lasers ohne eine aktive Stabilisierung möglich.

Zur Charakterisierung der Verluste in einem optischen Resonator der Länge L sind folgende drei Größen zweckmäßig:

- die Finesse F,

- der Verlustkoeffizient $\alpha_r$ und

- die Photonenlebensdauer $\tau_p = 1/(c \cdot \alpha_r)$.

Dabei ist die Finesse F, wie üblich, als das Verhältnis des Frequenzabstands zur spektralen Breite der Moden definiert.

Die Verluste in optischen Resonatoren sind im wesentlichen auf Absorption und Streuung in den optischen Komponenten sowie Verluste durch teilreflektierende Spiegel zurückzuführen. In dem angekoppelten nichtlinearen Resonator 6 können als weitere Verlustquellen, wie nichtbeschichtete Faserendflächen, und Verluste, die sich durch eine nichtperfekte Modenanpassung des Laserlichts an die Mode des Wellenleiters der Lichtleitfaser ergeben, hinzukommen.

Verluste $V_F$ aufgrund der Lichtleitfaser können durch die Transmission beim Einfachdurchgang beschrieben werden. Die Transmission $T_F$ ist das Verhältnis der Laserleistung vor der Faser zu der Laserleistung hinter der Faser, d.h. die Verluste können durch $V_F = 1 - T_F$ ausgedrückt werden. In den versuchsweise betriebenen Ausführungsbeispielen lag die Transmission $T_F$ typischerweise bei 75-80 %. Die Verluste $V_F$ durch die Lichtleitfaser bei einem einfachen Durchgang waren dementsprechend 20- 25 %.

Bei einem einfachen Umlauf durch den Resonator der Länge L wird die Intensität der Welle um den Faktor (1-$R_{GESAMT}$) reduziert, wobei gilt:

$$R_{Gesamt} = \exp(-2 \cdot \alpha_r \cdot L)$$

Der Gesamtverlustkoeffizient $\alpha_r$ ist demnach:

$$\alpha_r = \frac{1}{2L} \ln\left(\frac{1}{R_{Gesamt}}\right) = \frac{1}{2L} \ln\left(\frac{1}{1 - V_{Gesamt}}\right)$$

mit $R_{Gesamt} + V_{Gesamt} = 1$; wenn $V_{Gesamt}$ der Gesamtverlustfaktor eines Umlaufs ist.

Um den hier eingesetzten Mechanismus der Kompensation einer Änderung der linearen Phase durch die nichtlineare Phase zu gewährleisten, muß das Licht nach einem Umlauf in dem angekoppelten Resonator noch mit sich selbst wechselwirken können, d. h. es darf durch die Verluste im angekoppelten Resonator noch nicht zu stark abgeschwächt sein. Die Bedingung ist demnach, daß die Photonenlebensdauer $\tau_p = 1/(c \cdot \alpha_r)$ größer sein muß als die Resonatorumlaufzeit $\tau_r = 2L/c$. Es gilt dann:

$$\tau_p > \tau_r$$

Setzt man die obigen Bedingungen in die Ungleichung ein, ergibt sich:

$$1/\ln(1/R_{Gesamt}) < 1 \quad \Leftrightarrow \quad R_{Gesamt} > 1/e \quad \Leftrightarrow \quad V_{Gesamt} < (1 - 1/e) \approx 0{,}63$$

Die Gesamtverluste in dem angekoppelten Resonator sollten daher also geringer als 63% sein, um den gewünschten stabilen modengekoppelten Betrieb des Lasers passiv, ohne eine aktive Stabilisierung, zu ermöglichen. Dies steht in Übereinstimmung mit experimentellen Ergebnissen, wie später noch demonstriert wird.

Um diese hohe Güte in dem angekoppelten Resonator zu erreichen, können neben der Wahl eines hohen Reflexionsgrades des Auskoppelspiegels 4 weitere Maßnahmen getroffen werden. Die Einkoppeleffizienz der Laserstrahlung in das Medium 12 kann beispielsweise, wenn dieses eine Lichtleitfaser ist, durch Modenanpassung der Lasermode an den Mode des Wellenleiters durch geeignete Wahl einer Linse, welche die Strahlung in die Lichtleitfaser fokussiert, maximiert werden.

Eine derartige Modenanpassung sollte ebenso für diejenige Strahlung durchgeführt werden, die von dem hochreflektierenden Spiegel 10 des nichtlinearen Resonators 6 in die beispielhaft für das nichtlineare Medium genannte Lichtleitfaser zurückgeführt wird. Insbesondere hat sich dabei gezeigt, daß eine besonders gute Modenanpassung und damit Optimierung der Kopplungseffizienz und Güte des Resonators erreicht wird, wenn statt eines planen hochreflektierenden Spiegels 10 ein Spiegel mit einer plankonkaven Oberfläche verwendet wird, deren Brennweite größer als die Resonatorlänge des nichtlinearen Resonators 6 ist. Insbesondere haben Ergebnisse mit einem Krümmungsradius von R = - 2 m bei einer Resonatorlänge von ungefähr zwei Metern gute Ergebnisse gezeigt. Insbesondere ist dann die Justierempfindlichkeit dieses Spiegels 10 wesentlich verringert. Als Alternative zu einem separaten Spiegel 10 kann natürlich auch die Endfläche einer als nichtlineares Medium eingesetzten Lichtleitfaser verspiegelt sein.

Vergleicht man den Aufbau von Figur 1 mit den aus dem Stand der Technik bekannten, ist festzustellen, daß die Zahl der Komponenten bei dem eingesetzten Modenkopplungsverfahren wesentlich verringert sind. Außerdem gewährleistet diese Art der Modenkopplung einen stabilen und wenig von den Einstellungen der Laser- und Resonatorparameter abhängigen Betrieb. Der modengekoppelte Betrieb ist trotz des interferometischen Aufbaus gegenüber mechanischen Störungen unempfindlich.

Ein Aufbau zur Erzeugung kontinuierlich modengekoppelter kohärenter Strahlung wird anhand einer Vorrichtung gemäß Fig. 2, die im Labor aufgebaut wurde und an der Messungen durchgeführt wurden, eingehender dargestellt. Die Spiegel 8, 4 und 10 haben dabei dieselbe Bedeutung wie in Fig. 1.

Der Laserkristall 14 im Hauptresonator 2 bestand aus Nd:YVO$_4$. Der Hauptresonator wurde mit den Spiegeln 8, 20, 22, 24 und 26 und 4 aufgebaut. Die Pumpstrahlung von Laserdioden wurde entsprechend der dargestellten Pfeile über die Spiegel 22 und 24 eingekoppelt.

Die Spiegel 20 bis 26 sind hochreflektierend für die Emissionswellenlänge des Nd:YVO$_4$-Lasers von 1064 nm. Die Spiegel 22 und 24 hatten ferner eine hohe Transmission für Licht der Wellenlänge der Pumplaserdioden von 808 nm und waren auf der Rückseite für 808 nm antireflexbeschichtet.

Mit den Spiegeln 8 und 4 werden die vorher schon beschriebenen Auskoppelspiegel mit unterschiedlichen Transmissionswerten für 1064 nm realisiert. Beispielsweise hatte der Spiegel 8 eine Transmission von 9% und der Spiegel 4 eine Transmission von 3%.

Beide Spiegel waren auf der Rückseite für 1064 nm antireflexbeschichtet und waren auf einem Substrat mit einem Keilwinkel von $0{,}5^0$ aufgedampft, um eine unerwünschte Rückkopplung in die Resonatoren zu verhindern. Gleichfalls war der Nd:YVO$_4$ - Kristall für 1064 nm und 808 nm antireflexbeschichtet.

Die Krümmungsradien der Spiegel 20 und 26 und die Abstände der Resonatorspiegel 8 und 4 waren so gewählt, daß der Strahlradius der Resonatormode im Nd:YVO$_4$-Kristall an den Strahlradius der Pumpstrahlung für eine Emission von der Laserstrahlung mit einer Beugungsmaßzahl $M^2 < 1.2$ angepaßt war. Der Resonator von Spiegel 8 bis Spiegel 4 hatte dabei eine Länge von etwa 94 cm, so daß eine Repetitionsrate der Laserimpulse von 160 MHz erreicht wurde. Die Spiegel 20 und 26 hatten dabei Krümmungsradien von - 500 mm. Alle anderen Resonatorspiegel wiesen plane Oberflächen auf, hatten also einen Krümmungsradius von $\infty$.

Der angekoppelte nichtlineare Resonator erstreckt sich von Spiegel 4 über die Umlenkspiegel 28 und 30 bis zum Spiegel 10. Im angekoppelten Resonator befindet sich eine Lichtleitfaser als nichtlineares Medium 12 mit der geometrischen Länge von 70 cm. Die Länge des angekoppelten Resonators entsprach damit der zweifachen Länge des Hauptresonators, nämlich 1,88 m. Die Länge berechnet sich in bekannter Weise aus der optischen Länge der Lichtleitfaser der Abmessung 0,7 m x 1.45 und dem Brechungsindex von n=1,45 sowie den geometrischen Abständen der Spiegel.

Als Lichtleitfaser wurde eine polarisationserhaltende Lichtleitfaser mit einem Modenfelddurchmesser von 7,2 $\mu$m und einer numerischen Apertur von NA=0,11 eingesetzt. Diese Faser besaß für $\lambda$=1064 nm eine V-Kennzahl von 2,05 und stellte damit für die Wellenlänge von 1064 nm eine single-mode Lichtleitfaser dar. Die Einkopplung des Laserlichts in die Faser und die Kollimierung des Laserlichts hinter der Faser wurde mit Linsen 32 und 34 durchgeführt. Die Linse 32 kann auch auf der zur Hauptresonator 14 weisenden Seite insbesondere plan und verspiegelt sein, so daß die verspiegelte Fläche statt des Spiegels 4 als Resonator-Spiegel wirkt.

Nach Reflexion am Spiegel 10 kehrt das Laserlicht über die Komponenten 34, 12, 32, 30, 28 zum Auskoppelspiegel 4 zurück und wird wieder in den Hauptresonator 2 eingekoppelt.

Zur Anpassung der Länge des angekoppelten Resonators an die Länge des Hauptresonators wurde der Spiegel 10 auf einem X-Translationstisch befestigt, mit dessen Hilfe die Längenverstellung mit einer Genauigkeit von typisch 10 $\mu$m durchgeführt werden konnte. Zur Feineinstellung der Resonatorlänge wurde der Spiegel 10 zusätzlich auf einem piezoelektrischen Verstellelement befestigt, mit dem die Resonatorlänge mit einer Genauigkeit innerhalb von Nanometern eingestellt werden konnte.

Die Pumpleistung durch zwei Laserdioden, die in dem Kristall 14 über die Spiegel 22, 24 eingekoppelt wurde, hatte einen Wert von 2 x 12 W = 24 W. Der Laser zeigte dann im Betrieb ohne angekoppelten Resonator eine Ausgangsleistung von 8,7 W hinter dem Spiegel 8. Bei Gesamtverlusten im Hauptresonator von 10 % hatte der Laser im Laserbetrieb eine Schwellenüberhöhung von r=34,6. Damit beträgt die Schwellenpumpleistung 1/34,6 der eingesetzten Pumpleistung, mit der dieser Hauptresonator angeregt wurde. Mit angekoppeltem nichtlinearen Resonator war die Ausgangsleistung hinter dem Spiegel 8 mit 9,3 W höher.

Dieser Laser emittierte ultrakurze Impulse einer Pulsdauer von 6,8 ps und einer spektralen Breite von 60 GHz. Zur Bestimmung der Breite wurde dabei ein sech$^2$ - förmiger Intensitätsverlauf angenommen, eine Kurve, die ausgezeichnet zu dem beobachteten Pulsverlauf paßte. Der Laser zeigte sich vor allem unempfindlich auf Änderungen der Resonatorlänge, die kontinuierlich über einen Bereich von mehreren Mikrometern, also einer Phasenänderung von mehreren $\pi$, verstimmt werden konnte, ohne daß der modengekoppelte Betrieb des Lasers unterbrochen wurde.

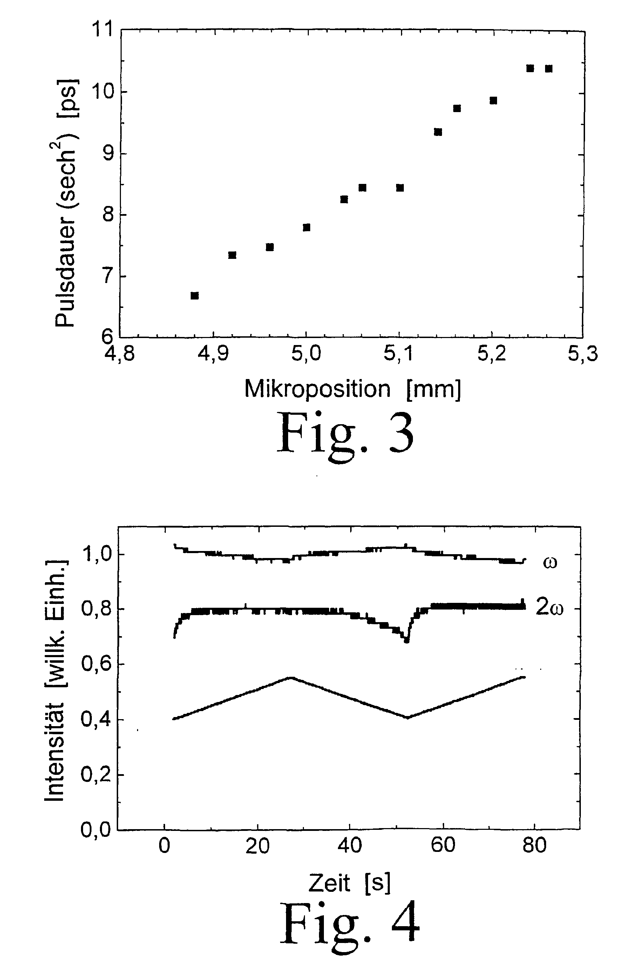

Die Pulsdauer der Laserimpulse war insbesondere durch die Veränderung der Resonatorlänge des nichtlinearen Resonators 6 verstellbar. Dazu wurde der Spiegel 10 mit Hilfe des X-Translationstisches in Richtung der Resonatorachse über einen Längenbereich von nahezu 500 $\mu$m verschoben. In Fig. 3 ist die Pulsdauer als Funktion der Mikrometerposition, also der Längenverstimmung, dargestellt. Es ist deutlich zu sehen, daß die Pulsdauer sich trotz großer Längenänderungen nur in einem Bereich von 6,7 ps bis 10,5 ps veränderte.

Wird der Resonator sogar über die in Fig. 3 aufgetragene Mikrometerposition von 5,26 mm hinaus verlängert, so bleibt der Laser modengekoppelt. Im Spektrum zeigt sich dann jedoch neben dem modengekoppelten Spektrum ein zusätzlicher schmaler Peak. Der Laser emittiert dann ultrakurze Impulse über einem kontinuierlichen Untergrund. Eine Verkürzung des angekoppelten Resonators unter der in Fig. 3 auf der Ordinate dargestellten Mikrometerposition von 4,8 mm führte zur Emission eines modengekoppelten Pulszuges, der zusätzlich niederfrequent moduliert war, es trat also die sogenannte Relaxationsoszillation auf. Die Frequenz bei diesem Lasersystem lag bei 400 kHz, bei einer Wiederholrate von 160 MHz.

Insbesondere ist wie schon ausgeführt, die Langzeitstabilität des Lasers von besonderer Bedeutung. Zur deren Ermittlung wurde der erzeugte Laserstrahl auch frequenzverdoppelt und sowohl die Fundamentale als auch die frequenzverdoppelte Strahlung des Lasers jeweils mit einer Photodiode vermessen. Frequenzverdoppelte Strahlung ist wegen der quadratischen Abhängigkeit der Spitzenleistung der zweiten Harmonischen besonders sensitiv auf Änderungen der Pulsdauer des Lasers, so daß die zweite Harmonische besonders kritisch auf Instabilitäten reagiert.

Alle Messungen zeigten einen stabilen Langzeitbetrieb dieses Lasersystems sowohl in der Fundamentalstrahlung als auch in der zweiten Harmonischen über drei Stunden, obwohl der Laser nicht aktiv elektronisch stabilisiert war. Die Ausgangsleistung des Lasers zeigte dabei eine Varianz von 0,6% in der Fundamentalen und 0,4% in der zweiten Harmonischen.

Für die Stabilität ist ebenso die in Fig. 4 dargestellte Messung der Abhängigkeit der mittleren Leistung der Grundwelle und der zweiten Harmonischen des Lasers als Funktion der Resonatorlängenverstimmung des angekoppelten Resonators mit Hilfe eines Piezoverstellelements interessant. In einem Versuch dazu wurde eine Dreiecksspannung mit einer Frequenz von 0,02 Hz und einem maximalen Hub von 15 V an das Piezo-Element (PI 840.10, 15 $\mu$m/ 150V) angelegt. Über diese Spannung wurde eine maximale Veränderung der Resonatorlänge von 2,25 $\mu$m erreicht. Die untere Kurve in Fig. 4 zeigt die Spannungsrampe, die obere Kurve stellt die mittlere Ausgangsleistung und die mittlere Kurve die zweite Harmonische des Lasers dar. Es ist deutlich erkennbar, daß sich das Signal der zweiten Harmonischen trotz der Resonatorlängenänderung um mehr als 2 $\mu$m kaum ändert. Die Figur zeigt, daß mit diesem Aufbau und dem eingesetzten Modenkopplungsverfahren ein stabiler modengekoppelter Betrieb des Lasers ohne aktive (elektronische) Stabilisierung möglich ist.

In einem weiteren Experiment wurde die Ausgangsleistung des Lasers erhöht. Dazu wurde die Pumpleistung durch die Wahl anderer leistungsstärkerer Laserdioden erhöht und ein anderer Nd:YVO$_4$-Kritall eingesetzt. Die Pumpleistung lag dabei etwa bei 2 x 24 W = 48 W. Die Ausgangsleistung stieg dann im kontinuierlichen Betrieb auf 16 W an. Dieser Laser zeigte bei Gesamtverlusten von 17 % im Hauptresonator eine Schwellenüberhöhung von r=8,7. Damit beträgt die Schwellenpumpleistung 1/8,7 der eingesetzten Pumpleistung, mit der dieser Hauptresonator angeregt wurde. Die Ausgangsleistung im modengekoppelten Betrieb stieg sogar auf 18,3 W an. Beide Leistungen wurden hinter dem Spiegel 8 gemäß Fig. 2 gemessen.

Der Laser emittierte dabei weiter ultrakurze Pulse mit einer Pulsdauer von 6,7 ps und einer spektralen Breite von 60 GHz. Die Spitzenleistung dieses Lasers war dann 17,1 kW und damit hinreichend groß, um optisch nichtlineare Frequenzkonversionen in einem Optisch-Parametrischen-Oszillator oder für eine Erzeugung höherer Harmonischer oder auch Summenfrequenzmischung mit höchster Effizienz betreiben zu können.

Die vorgestellten Messungen zeigen, daß mit diesem Aufbau und dem eingesetzten Modenkopplungsverfahren ultrakurze Pulse sehr hoher mittlerer Leistung ohne aktive Stabilisierung erzeugt werden können. Mit der Erhöhung der Ausgangsleistung ist vor allem auch keine Verschlechterung der Stabilität des Lasers zu beobachten.

Der Laser emittierte sowohl Pulse hoher mittlerer Leistung als auch kurzer Dauer. Mit dem dabei eingesetzten Modenkopplungsverfahren sind die Ausgangsgrößen des Lasersystems sogar unabhängig voneinander optimierbar. Wie aus den Daten und den Abbildungen ersichtlich ist, ist die dargestellte Vorrichtung vor allem robust gegen große Änderungen der Parameter des Resonators und der Leistung. Zur Überprüfung der vorher erläuterten rechnerischen Abschätzung wurden in den angekoppelten Resonator 6 zwischen Linse 34 und Spiegel 10 ein Polarisationsstrahlteiler und eine λ/2-Platte eingesetzt. Durch Drehen der linearen Polarisation mit Hilfe der λ/2- Platte konnte dadurch am Polarisationsstrahlteiler ein Teil des Lichts ausgekoppelt werden, so daß in den angekoppelten Resonator definiert zusätzliche Verluste eingeführt werden konnten.

Für drei unterschiedliche Gesamtverluste wurde dann jeweils eine Stabilitätsmessung durchgeführt. Zur Intensitätsmessung wurde die Laserstrahlung auf eine GaAsP-Photodiode gelenkt, die unempfindlich für die Fundamentalstrahlung des Lasers ist.

Allerdings wurde durch Zwei-Photonenabsorption immer dann ein Signal generiert, wenn der Laser modengekoppelt war, und dementsprechend ultrakurze Impulse mit hoher Spitzenleistung vorhanden waren.

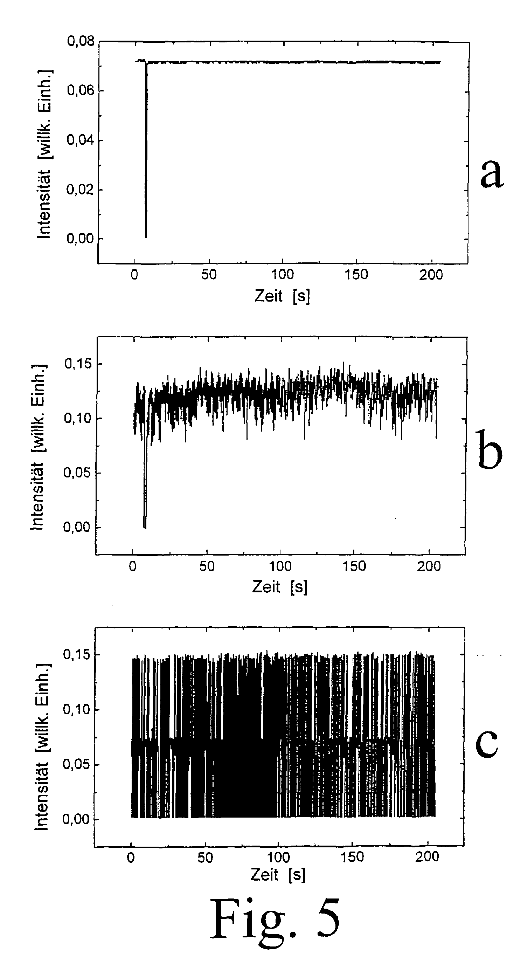

Die Ergebnisse dieser Experimente sind in Fig. 5a-e dargestellt. Die in Fig. 5a und 5b zu sehenden Einbrüche des Signals bei einer Zeit von etwa 10s sind allein auf Eichungen des Nullpunktes durch Abblocken des Laserstrahls zurückzuführen.

In der Fig. 5a wurden keine zusäzlichen Verluste eingeführt. Mit einer Transmission der Lichtleitfaser im Einfachdurchgang von $T_F$=78% und eines Reflektionsgrads des Spiegels 4 von R=97% ergab sich für dieses Experiment ein Gesamtverlust von $V_{Gesamt}$ =41%. Die Gesamtverluste sind damit geringer als es gemäß der abgeschätzten Bedingung von 63% erforderlich ist. Wie in der Fig. 5a zu sehen ist, ergibt sich ein konstantes Signal der Photodiode. Der Laser zeigt einen stabilen modengekoppelten Betrieb.

In der Fig. 5b betragen die Gesamtverluste $V_{Gesamt}$=59%. Dazu wurden 30% Laserleistung durch einen zusätzlichen eingeführten Strahlteiler ausgekoppelt. Die Gesamtverluste von 59% sind dann nahe an der abgeschätzten Grenze von 63%. Der Laser arbeitet, wie in Fig. 5b zu sehen ist, auch wesentlich instabiler.

Für die in Fig. 5e gezeigte Messung sind die Verluste weiter auf 68% erhöht worden. Die Gesamtverluste sind in diesem Fall größer als die abgeschätzte Grenze. Als Ergebnis ist in Fig. 5c auch deutlich zu sehen, daß der Laser nun sehr instabil arbeitet. Der Laser ist nur in kurzen Intervallen modengekoppelt (maximales Signal in Fig. 5c), und emittierte dazwischen kontinuierlich (kein Signal in Fig. 5c). Zwischen diesen Zuständen springt der Laser fortlaufend hin- und her. Der Betriebszustand der Fig. 5e entspricht damit solchen Bedingungen, wie sie aus bisherigen Veröffentlichungen und Patentschriften für freilaufende, nicht aktiv stabilisierte APM-Laser bekannt sind.

Die Angabe der Grenze der Gesamtverluste im angekoppelten Resonator gemäß der vorherigen Abschätzung ist also geeignet, das eingesetzte Modenkopplungsverfahren gut zu definieren.

In dem Ausführungsbeispiel von Fig. 2 ist das Medium für die nichtlineare Phasenverschiebung eine polarisationserhaltende single-mode Lichtleitfaser der Länge L=70 cm. Es ist jedoch auch möglich, Fasern anderer Länge einzusetzen, ohne daß die Funktionsweise der dargestellten Vorrichtung beeinträchtigt ist. In dem oben beschriebenen Versuchsaufbau wurden beispielsweise auch Fasern der Länge 40, 50, 60 und 100 cm verwendet, ohne daß Nachteile in Kauf genommen werden mußten. Vorteilhaft sind insbesondere Fasern, bei denen die optische Länge des angekoppelten nichtlinearen Resonators gleich der Länge des Hauptresonators ist, also deren Länge nicht einem ganzzahligem Vielfachem der letztgenannten entspricht. Dann können nämlich kompaktere und stabilere Aufbauten realisiert werden. Bezogen auf das Ausführungsbeispiel von Fig. 2 (Repetitionsrate 160 MHz) gilt dies insbesondere für Faserlängen ≤ 50 cm.

Zur Verminderung der Verluste im angekoppelten Resonator und zur Erhöhung der Finesse können die Faserenden auch antireflexbeschichtet sein.

Statt wie in Fig. 2 kann das Faserende an Stelle der Linse 34 und dem Spiegel 10 direkt verspiegelt werden. Damit erhält man einen noch geringeren Verlust, erhöht die Finesse des angekoppelten Resonators und damit die optische Stabilität des Systems.

Der Einsatz von Fasern, die nicht polarisationserhaltend sind, ist ebenfalls möglich, jedoch ist das System dann empfindlicher gegen äußere Störungen und die Stabilität ist geringer. Der Grund liegt in Änderungen der Polarisationsrichtung nach Durchlauf des Pulses durch die Faser, die von den äußeren Bedingungen der Faser, wie beispielsweise der Lage oder deren Biegeradius, abhängen. Derartige Bedingungen können eine Modulation der Amplitude bewirken, vor allem, da der Nd:YVO$_4$ -Kristall polarisiert emittiert und deshalb eine feste Polarisationsrichtung bevorzugt verstärkt.

Neben dem Einsatz einer Lichtleitfaser können auch Wellenleiter auf planaren Strukturen eingesetzt werden, wie sie in der integrierten Optik verwendet werden. Dadurch ergeben sich weiterreichende Anwendungen des Verfahrens, da dann auch Materialien mit größerem nichtlinearen Brechungsindex eingesetzt werden können.

Dieses würde dann im Vergleich zu einer Lichtleitfaser zu kleineren Längen der Wellenleiter führen, so daß kompaktere Systeme und noch höhere Repetitionsraten möglich werden.

Für hohe Leistungen im Resonator können auch Volumenmaterialien eingesetzt werden. Dann können beispielsweise Elemente zur Einkopplung des Laserlichts in das nichtlineare Medium 12, wie die Linse 32 entfallen, wodurch wesentlich verringerte Verluste entstehen. Insbesondere eignen sich dazu unter Brewsterwinkel arbeitende Medien. Außerdem ist dann die Anzahl verwendbarer Medien vergößert, so daß eine noch bessere Anpassung bzw. Optimierung für die Ausgangsdaten des Lasers gegeben ist.

Das Verfahren ist auch bei Verwendung von anderen Verstärkungsmedien als Nd:YVO$_4$ anwendbar, da die Impulserzeugung durch das vom Verstärkungsmedium unabhängige nichtresonante nichtlineare Medium hervorgerufen wird. Beispielhaft seien hier Neodym- dotierte Kristalle in verschiedenen Wirtsgittern wie Nd:YLF, Nd:YAG, Nd:YVO$_4$, Nd:GVO$_4$, Nd:YPO$_4$. Nd:BEL, Nd:YALO, Nd:LSB genannt.

Neben den mit Nd dotierten Laserkristallen können auch Kristalle eingesetzt werden, die beispielsweise mit anderen Seltenerd-Ionen dortiert sind. Ferner sollte die Modenkopplung und Impulsverkürzung in Konfigurationen möglich sein, die andere Laserübergänge in diesen Lasermedien benutzen. Neben dem im Ausführungsbeispiel verwendeten Laserübergang des Neodym-Ions bei 1,064 $\mu$m sind auch vorzugsweise die bekannten Laserübergänge um 1.3 $\mu$m und 900 nm anregbar. Ebenso ist die Modenkopplung mittels solcher Laserkristalle möglich, die mit Ionen der Übergangsmetalle dotiert sind. Derartige über einen größeren Wellenlängenbereich abstimmbaren Laserkristalle sind beispielsweise Ti:Saphir, Cr: LiSaF und Cr:LiCaF.

Das Verfahren ist nicht auf eine bestimmte Resonatorkonfiguration beschränkt. Es besteht insbesondere die Möglichkeit, eine Modenkopplung auch bei Resonatoren größerer oder geringerer Länge, d. h. bei niedriger oder höherer Wiederholrate, zu erreichen. Ein besonderer, sich aus einer höheren Wiederholrate ergebender Vorteil, liegt unter anderem in der geringeren Baulänge eines solchen Systems.

Im Ausführungsbeispiel war das Verhältnis der Längen des Haupt- und des angekoppelten Resonators 1:2. Andere ganzzahlige Längenverhältnisse der beiden Resonatoren sind ebenso möglich. Beispielsweise ist auch ein Verhältnis von 2:3 geeignet.

Weiter ist dieses Verfahren nicht auf die in den Ausführungsformen dargestellte longitudinale Punpanordnung der Laserdioden begrenzt. Eine transversale Anordnung der Laserdioden ist ebenfalls möglich. Der Laserkristall wird dabei seitlich von den Laserdioden angeregt. Dieses transversale Pumpen ist insbesondere dann vorteilhaft, wenn die räumliche Strahlqualität der verwendeten Laserdioden gering ist, wie bei Hochleistungslaserdiodenbarren oder wenn der Laserkristall eine große Absorptionslänge besitzt. Ferner sind auch lampengepumpte Systeme ohne weiteres einsetzbar.

Eine Erhöhung der Leistung mit diesem Verfahren ist ebenfalls möglich. Dazu kann eine Konfiguration gewählt werden, die beispielsweise mehrere Laserkristalle im Resonator beinhaltet. Außerdem sind auch höhere Pumpleistungen der Laserdioden möglich.

Um die Pulse weiter zu verkürzen, sind die bekannten Methoden der Kompensation für verschiedene Gruppengeschwindigkeiten innerhalb des Pulses, bekannt als GVD-Kompensation, anwendbar. Dazu müssen in den Resonator geeignete optische Komponenten wie Kompensationsprismen, Girés-Tournois-Interferometer, Kompensationsgitter oder spezielle dielektrische Laserspiegel eingebracht werden. Diese Spiegel sind unter dem Namen "chirp mirror" oder "GTI-Spiegel" bekannt. Die unterschiedliche Eindringtiefe der verschiedenen Frequenzanteile innerhalb eines Pulses in die dielektrische Spiegelschicht führen bei diesen Spiegeln zur gewünschten Kompensation der Gruppengeschwindigkeiten und damit zu einer weiteren Reduktion der Pulsdauer.

Der Einsatz eines in der dargelegten Weise angekoppelten nichtlinearen Resonators kann auch mit den bisher bekannten Verfahren der Modenkopplung wie z. B. der akusto- optisch und elektro-optischen Modulation oder Verwendung eines sättigbaren Halbleiterabsorbers kombiniert werden. Dies trägt zu einer weiteren Verkürzung der erzeugten Impulse bei.

Diese Ausführungen zeigen, daß eine Vielfalt von Möglichkeiten gegeben ist, mit der die dargestellten Vorrichtungen für verschiedene Anwendungsbereiche und Ausgangsparameter, wie Leistung und Pulslänge, optimiert werden können. Die diskutierten Änderungen erlauben aber immer eine hohe Robustheit und Stabilität, wenn nur die erfindungsgemäßen Kriterien eingehalten werden.

**Patentansprüche**

1.  Verfahren zum Erzeugen von Laserlicht mit einer Vorrichtung, welche einen laseraktiven Hauptresonator (2) und einen an diesen angekoppelten nichtlinearen Resonator (6) enthält, wobei

    - jeder der beiden Resonatoren (2, 6) durch Spiegel (8, 4; 4, 10) begrenzt ist und ein Spiegel (4) des Hauptresonators (2) mit einem Spiegel (4) des angekoppelten nichtlinearen Resonators (6) identisch ist, **dadurch gekennzeichnet daß**
    - der nichtlineare Resonator (6) so ausgelegt ist, daß der Gesamtverlustfaktor eines Umlaufs in dem nichtlinearen Resonator (6) geringer als 63% ist,
    - der laseraktive Hauptresonator (2) so angeregt wird, daß er im Laserbetrieb eine Schwellenpumpleistung besitzt, die weniger als ein Fünftel, bevorzugt weniger als ein Zehntel der eingesetzten Pumpleistung beträgt, mit der der Hauptresonator (2) angeregt wird.

2.  Vorrichtung zur Durchführung des Verfahrens nach Anspruch 1, mit einer Pumpquelle, einem laseraktiven Hauptresonator (2) sowie einem angekoppelten nichtlinearen Resonator (6), wobei

    - jeder der beiden Resonatoren (2, 6) durch Spiegel (8, 4; 4, 10) begrenzt ist und ein Spiegel (4) des Hauptresonators (2) mit einem Spiegel (4) des angekoppelten nichtlinearen Resonators (6) identisch ist, und
    - der nichtlineare Resonator (6) so ausgelegt ist, daß der Gesamtverlustfaktor eines Umlaufs in dem nichtlinearen Resonator (6) geringer als 63% ist,

    **dadurch gekennzeichnet , daß**

    - einer der den Hauptresonator (2) begrenzenden Spiegel (8) ein Auskoppelspiegel (8) ist, und
    - der Spiegel (4), der sowohl den Hauptresonator (2) als auch den nichtlinearen Resonator (6) begrenzt, eine Transmission aufweist, die weniger als die Hälfte und insbesondere weniger als 1/3 der Transmission des Auskoppelspiegels (8) des Hauptresonators (2) beträgt.

3.  Vorrichtung nach Anspruch 2,
    **dadurch gekennzeichnet, daß**

    - der Spiegel (4), der sowohl den Hauptresonator (2) als auch den nichtlinearen Resonator (6) begrenzt, eine Transmission kleiner gleich 5% hat.

4.  Vorrichtung nach einem der Ansprüche 2 oder 3,
    **dadurch gekennzeichnet, daß**

    - der nichtlineare Resonator (6) ein Medium (12) mit nichtlinearem Brechungsindex aufweist.

5.  Vorrichtung nach Anspruch 4,
    **dadurch gekennzeichnet, daß**

    - das Medium (12) mit nichtlinearem Brechungsindex zumindest teilweise durch den Kern einer Lichtleitfaser ausgebildet ist.

6.  Vorrichtung nach Anspruch 5,
    **dadurch gekennzeichnet, daß**

    - mindestens ein Ende der Lichtleitfaser mit einer Antireflexschicht versehen ist.

7.  Vorrichtung nach Anspruch 5 oder 6,

**dadurch gekennzeichnet, daß**

- ein den nichtlinearen Resonator (6) begrenzender Spiegel (4, 10) als verspiegelte Endfläche der Lichtleitfaser ausgebildet ist.

**8.** Vorrichtung nach Anspruch 7,
**dadurch gekennzeichnet, daß**

- der den nichtlinearen Resonator (6) begrenzende Spiegel (10), der gegenüber demjenigen Spiegel (4) liegt, der mit dem des Hauptresonators (2) identisch ist, als verspiegelte Endfläche der Lichtleitfaser ausgebildet ist.

**9.** Vorrichtung nach einem der Ansprüche 5 bis 8,
**dadurch gekennzeichnet, daß**

- eine Linse (32) zur Einkopplung von Licht in die Lichtleitfaser vorgesehen ist, deren eine Seite als Spiegel für den Hauptresonator verspiegelt ist.

**10.** Vorrichtung nach einem der Ansprüche 2 bis 9,
**dadurch gekennzeichnet, daß**

- ein den nichtlinearen Resonator (6) begrenzender Spiegel (10), der mit dem Spiegel (4) des Hauptresonators (2) nicht identisch ist, eine in Richtung auf das Resonatorinnere konkav gekrümmte Oberfläche aufweist, deren Brennweite insbesondere kleiner als das Dreifache und insbesondere kleiner als das Doppelte der Resonatorlänge des nichtlinearen Resonators (6) ist.

**11.** Vorrichtung nach einem der Ansprüche 2 bis 10,
**dadurch gekennzeichnet, daß**

- zwischen den äußeren Spiegeln (4, 8) des Hauptresonators (2) oder des nichtlinearen Resonators (6) weitere Spiegel (20, 22, 24, 26) zur Faltung des Lichtwegs vorgesehen sind, von denen mindestens einer zum Einkoppeln des Pumplichts vorgesehen ist.

**12.** Vorrichtung nach einem der Ansprüche 2 bis 11,
**dadurch gekennzeichnet, daß**

- der Hauptresonator (2) mit einem lasenden Medium (14) zwischen den Spiegeln als Laser ausgebildet ist, für den zwei optische Elemente, insbesondere zwei Spiegel (20, 26) mit einer Krümmung und einem Abstand zum lasenden Medium vorgesehen sind, aufgrund derer die Laserstrahlung mit einer Beugungsmaßzahl $M^2 < 2$ emittierbar ist.

**Claims**

**1.** Method for generating laser light with a device which contains a laser-active main resonator (2) and a coupled non-linear resonator (6), wherein

- each of the two resonators (2, 6) being delimited by mirrors (8, 4; 4, 10), and one mirror (4) of the main resonator (2) being identical to a mirror (4) of the coupled non-linear resonator (6),

**characterized in that**

- the non-linear resonator (6) is designed such that the total loss factor of one round-trip in the non-linear resonator (6) is less than 63%,
- the laser-active main resonator (2) is excited such that in laser operation it has a threshold pump power which is less than one fifth, preferably less than one tenth, of the pump power with which the main resonator (2) is excited.

**2.** Device for carrying out the method according to claim 1, comprising a pump source, a laser-active main resonator (2) and a coupled non-linear resonator (6), wherein

- each of the two resonators (2, 6) being delimited by mirrors (8, 4; 4, 10), and one mirror (4) of the main resonator (2) being identical to a mirror (4) of the coupled non-linear resonator (6), and
- the non-linear resonator (6) is designed such that the total loss factor of one round-trip in the non-linear resonator (6) is less than 63%,

**characterized in that**

- one of the mirrors (8) delimiting the main resonator (2) is a de-coupling mirror (8), and
- the mirror (4), which delimits both the main resonator (2) and the non-linear resonator (6), has a transmission which is less than half, and in particular less than 1/3, of the transmission of the de-coupling mirror (8) of the main resonator (2).

3. Device according to claim 2,
**characterized in that**

- the mirror (4) which delimits both the main resonator (2) and the non-linear resonator (6) has a transmission less than or equal to 5%.

4. Device according to one of claims 2 or 3,
**characterized in that**

- the non-linear resonator (6) has a medium (12) with a non-linear index of refraction.

5. Device according to claim 4,
**characterized in that**

- the medium (12) with non-linear index of refraction is at least partly in the form of the core of an optical fibre.

6. Device according to claim 5,
**characterized in that**

- at least one end of the optical fibre is provided with an anti-reflection coating.

7. Device according to claim 5 or 6,
**characterized in that**

- a mirror (4, 10) which delimits the non-linear resonator (6) is in the form of a mirrored end surface of the optical fibre.

8. Device according to claim 7,
**characterized in that**

- the mirror (10) which delimits the non-linear resonator (6) and is opposite the mirror (4) which is identical to that of the main resonator (2), is in the form of a mirrored end surface of the optical fibre.

9. Device according to one of claims 5 to 8,
**characterized in that**

- a lens (32) for coupling light into the optical fibre is provided, and one side of it is mirrored as a mirror for the main resonator (2).

10. Device according to one of claims 2 to 9,
**characterized in that**

- a mirror (10), which delimits the non-linear resonator (6), and is not identical to the mirror (4) of the main resonator (2), has a surface which is curved concavely in the direction of the interior of the resonator, and the focal distance of which is in particular less than three times and in particular less than twice the resonator length of the non-linear resonator (6).

**11.** Device according to one of claims 2 to 10,
**characterized in that**

- between the outer mirrors (4, 8) of the main resonator (2) or non-linear resonator (6) further mirrors (20, 22, 24, 26) are provided to fold the light path, at least one of them being provided to couple in the pump light.

**12.** Device according to one of claims 2 to 11,
**characterized in that**

- the main resonator (2) is formed as a laser with a lasing medium (14) between the mirrors, for which two optical elements, particularly two mirrors (20, 26) with a curvature and a distance to the lasing medium are provided, on which basis the laser radiation can be emitted with a diffraction measuring number $M^2 < 2$.

**Revendications**

**1.** Procédé pour générer de la lumière laser comprenant un dispositif qui contient un résonateur principal (2) générant le rayon laser et un résonateur non linéaire (6) accouplé à celui-ci, dans lequel :

- chacun des deux résonateurs (2, 6) est limité par des miroirs (8, 4 ; 4, 10) et un miroir (4) du résonateur principal (2) est identique à un miroir (4) du résonateur non linéaire accouplé (6),

**caractérisé en ce que** :

- le résonateur non linéaire (6) est conçu de telle sorte que le facteur de perte totale d'une circulation dans le résonateur non linéaire (6) est inférieur à 63% ; et
- le résonateur principal (2) générant le rayon laser est excité de telle sorte qu'il possède pendant le fonctionnement du laser une puissance de pompage de seuil qui est inférieure à un cinquième, de préférence inférieure à un dixième de la puissance de pompage utilisée avec laquelle le résonateur principal (2) est excité.

**2.** Dispositif pour exécuter le procédé selon la revendication 1, comprenant une source de pompage, un résonateur principal (2) générant le rayon laser ainsi qu'un résonateur non linéaire accouplé (6), dans lequel :

- chacun des deux résonateurs (2, 6) est limité par des miroirs (8, 4 ; 4, 10) et un miroir (4) du résonateur principal (2) est identique à un miroir (4) du résonateur non linéaire accouplé (6) ; et
- le résonateur non linéaire (6) est conçu de telle sorte que le facteur de perte totale d'une circulation dans le résonateur non linéaire (6) est inférieur à 63%,

**caractérisé en ce que** :

- un des miroirs (8) qui limitent le résonateur principal (2) est un miroir de sortie (8); et
- le miroir (4) qui limite aussi bien le résonateur principal (2) que le résonateur non linéaire (6) présente une transmission qui est inférieure à la moitié et en particulier inférieure à 1/3 de la transmission du miroir de sortie (8) du résonateur principal (2).

**3.** Dispositif selon la revendication 2,
**caractérisé en ce que** :

- le miroir (4) qui limite aussi bien le résonateur principal (2) que le résonateur non linéaire (6) a une transmission qui est inférieure ou égale à 5%.

**4.** Dispositif selon l'une ou l'autre des revendications 2 et 3,
**caractérisé en ce que**:

- le résonateur non linéaire (6) présente un milieu (12) avec un indice de réfraction non linéaire.

**5.** Dispositif selon la revendication 4,
**caractérisé en ce que**:

- le milieu (12) avec l'indice de réfraction non linéaire est formé au moins partiellement par le noyau d'une fibre optique.

6. Dispositif selon la revendication 5,
   **caractérisé en ce que** :

   - au moins une extrémité de la fibre optique est munie d'une couche antireflet.

7. Dispositif selon l'une ou l'autre des revendications 5 et 6,
   **caractérisé en ce que** :

   - un miroir (4, 10) qui limite le résonateur non linéaire (6) est réalisé comme surface terminale avec couche réfléchissante de la fibre optique.

8. Dispositif selon la revendication 7,
   **caractérisé en ce que** :

   - le miroir (10) qui limite le résonateur non linéaire (6) et qui est placé à l'opposé de ce miroir (4), lequel est identique à celui du résonateur principal (2), est réalisé comme surface terminale avec couche réfléchissante de la fibre optique.

9. Dispositif selon l'une des revendications 5 à 8,
   **caractérisé en ce que** :

   - une lentille (32) dont un côté est muni d'une couche réfléchissante comme miroir pour le résonateur principal, est prévue pour l'injection de la lumière dans la fibre optique.

10. Dispositif selon l'une des revendications 2 à 9,
    **caractérisé en ce que** :

    - un miroir (10) qui limite le résonateur non linéaire (6) et qui n'est pas identique au miroir (4) du résonateur principal (2), présente une surface à courbure concave en direction de l'intérieur du résonateur, dont la distance focale est en particulier inférieure au triple et en particulier inférieure au double de la longueur de résonateur du résonateur non linéaire (6).

11. Dispositif selon l'une des revendications 2 à 10,
    **caractérisé en ce que**:

    - d'autres miroirs (20, 22, 24, 26) sont prévus entre les miroirs extérieurs (4, 8) du résonateur principal (2) ou du résonateur non linéaire (6) pour la déviation angulaire de la trajectoire de la lumière, parmi lesquels au moins un est prévu pour l'injection de la lumière de pompage.

12. Dispositif selon l'une des revendications 2 à 11,
    **caractérisé en ce que** :

    - le résonateur principal (2) comprenant un milieu à effet laser (14) entre les miroirs est réalisé comme laser pour lequel deux élément optiques, en particulier deux miroirs (20, 26), sont prévus avec une courbure et une certaine distance envers le milieu à effet laser, en raison desquelles le rayonnement laser peut être émis avec un indice de diffraction $M^2 < 2$.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5054027 A

- US 5345454 A

**In der Beschreibung aufgeführte Nicht-Patentliteratur**

- **H. G. DANIELMEYER.** Low-frequency dynamics of-homogeneous four-level-cw lasers. *Journal of Applied Physics,* 1970, vol. 41, 4014